# EUROPÄISCHE PATENTANMELDUNG

(11) **EP 0 745 775 A1**
(43) Veröffentlichungstag der Anmeldung: **04.12.1996**
(21) Anmeldenummer: 96890069.6
(22) Anmeldetag: 11.04.1996
(51) Int. Cl.: F16B 2/12, F21V 21/08, F16M 13/02

(54) **Schraubzwinge**

(30) Priorität: 02.06.1995 AT 940/95
(71) Anmelder: Ernst Stadelmann Gesellschaft m.b.H., A-4070 Eferding (AT)
(72) Erfinder: Schleicher, Siegfried, 4611 Buchkirchen (AT)
(74) Vertreter: Hübscher, Heiner, Dipl.-Ing.

(57) **Zusammenfassung**

Eine Schraubzwinge (2) zur Befestigung eines Ständers an einer Tischplatte (T) umfaßt zwei über ein Schraubengetriebe (5) aus Außengewindespindel (6) und Innengewindemutter (7) betätigbare Klemmbacken (3, 4), wobei der drehbare, einen Drehgriff (12) aufweisende Getriebeteil relativverdrehbar, aber verschiebefest an der einen Klemmbacke (3) und der drehfeste Getriebeteil dreh- und verschiebefest an der anderen Klemmbacke (4) angreifen und beide Klemmbacken (3, 4) relativ zueinander drehfest, aber schiebeverstellbar geführt sind.

Um bei einfacher Bauweise eine funktionssichere und stabile Schraubzwinge mit guter Klemmwirkung zu erreichen, bildet der drehbare Getriebeteil die den Drehgriff (12) tragende Mutter (7) und ist der Ständer (1) relativverdrehbar durch eine Axialbohrung (20) des Drehgriffes (12) hindurchsteckbar und drehfest an der der Mutter (7) zugeordneten Klemmbacke (3) abstützbar.

## Beschreibung

Die Erfindung bezieht sich auf eine Schraubzwinge zur Befestigung eines Ständers, insbesondere eines Schwenkarmes, an einer Tischplatte od. dgl., mit zwei über ein Schraubengetriebe aus Außengewindespindel und Innengewindemutter betätigbaren Klemmbacken, wobei der drehbare, einen Drehgriff aufweisende Getriebeteil relativverdrehbar, aber verschiebefest an der einen Klemmbacke und der drehfeste Getriebeteil dreh- und verschiebefest an der anderen Klemmbacke angreifen und beide Klemmbacken relativ zueinander drehfest, aber schiebeverstellbar geführt sind.

Solche Schraubzwingen sind vielfältig bekannt und dienen zum Festklemmen eines rohr- oder stangenförmigen Fußteiles von verschiedensten Aufnahmeständern, wie Tragarme und Schwenkarme für Telefone, Bildschirme und andere Bürogeräte, aber auch Schreibtischlampen u. dgl., wobei durch Verdrehen des Drehgriffes die Klemmbacken zum Festklemmen der Schraubzwinge an einer Tischplatte oder einer anderen Tragplatte betätigt werden. Bisher ist dabei der Drehgriff an der den drehbaren Getriebeteil bildenden Spindel angesetzt, die in der drehfesten Mutter eingeschraubt wird, so daß die einerseits mit der Mutter, anderseits mit dem Drehgriff oder der Spindel verbundenen Spannbacken beim Verschrauben der Spindel gegenüber der Mutter verstellt werden. Allerdings ist der aus Spindel und Drehgriff bestehende drehbare Getriebeteil recht aufwendig in der Herstellung, die beim Klemmen auftretenden Klemmkräfte führen zu beträchtlichen Biegemomenten, die ein die Klemmwirkung beeinträchtigendes Verformen der Zwinge mit sich bringen, die Gewindeteile erfordern wegen der Dimensionierungs- und Belastungsverhältnisse metallene Werkstoffe und nicht zuletzt wird durch die Spindel der Platz für eine axiale Aufnahme des Ständerfußes innerhalb der Zwinge verstellt, so daß die Ständer auf die Spindel aufzusetzen sind, was aber bei einer Drehmomentenbelastung des Ständers, wie sie häufig bei Schwenkarmen durch höhere Reibungskräfte, eingebaute Bremsen, Anschläge und Drehbegrenzungen u. dg. auftreten, zur Gefahr einer Spindelverdrehung und damit eines Lösens der Schraubzwinge führt.

Der Erfindung liegt daher die Aufgabe zugrunde, diese Mängel zu beseitigen und eine Schraubzwinge der eingangs geschilderten Art zu schaffen, die sich bei geringem Bauaufwand durch hohe Stabilität und Festigkeit und darüber hinaus durch ihre sichere Klemmwirkung auszeichnet.

Die Erfindung löst diese Aufgabe dadurch, daß der drehbare Getriebeteil die Mutter bildet und den Drehgriff trägt und der Ständer relativverdrehbar durch eine Axialbohrung des Drehgriffes hindurchsteckbar und drehfest an der der Mutter zugeordneten Klemmbacke oder dem drehfesten Getriebeteil abstützbar ist. Durch diese einfache Maßnahme ist es möglich, den Durchmesser des Getriebegewindes ohne Änderung der Zwingenabmessungen wesentlich zu vergrößern und damit einerseits die Festigkeitseigenschaften und anderseits die Platzverhältnisse zu verbessern. Die auftretenden Klemmkräfte treten im wesentlichen als Druckkräfte und nicht mehr als Biegemomente auf, was ohne Verformungsgefahr zu hohen und sicheren Klemmwirkungen führt. Die Vergrößerung der Gewindeabmessungen erlaubt eine kunststoffgerechte Ausführungsform, womit der Einsatz von Metallwerkstücken vermeidbar und die Herstellung wesentlich vereinfacht wird. Nicht zuletzt kann im Axialbereich durch eine entsprechend gelochte Spindel der Ständer bzw. der Ständerfuß in die Zwinge selbst eingesteckt und hier an einem nicht drehbaren Teil der Zwinge abgestützt werden, so daß auch Drehmomentenbelastungen des Ständers ohne jede Gefahr einer Getriebebetätigung aufgenommen werden können.

Ist der hülsenförmige Drehgriff selbst als Mutter vorgesehen und mit seinem klemmbackenseitigen Rand verdrehbar an einem Halteansatz der zugehörigen Klemmbacke ansetzbar, läßt sich Mutter und Drehgriff einstückig als Kunststoffteil herstellen, wozu durch das Verrasten mit der zugeordneten Klemmbacke eine geschickte Montage- und Demontagemöglichkeit kommt.

Besteht die Spindel aus einem über einen Steg mit der zugehörigen Klemmbacke einstückigen Zylinderstück, das ein Außengewinde und eine Innenbohrung aufweist, ist auch der Spindelteil der Zwinge rationell als Kunststoff-Formstück herstellbar, wobei das Zylinderstück mit seinem Außengewinde als Spindel mit dem Innengewinde des die Mutter bildenden Drehgriffes zusammenwirkt und die Innenbohrung ein einwandfreies und exaktes Einstecken des Ständers und dessen Abstützung an der der Mutter zugehörigen Klemmbacke oder auch an einer zylinderstückeigenen Abstützung erlaubt.

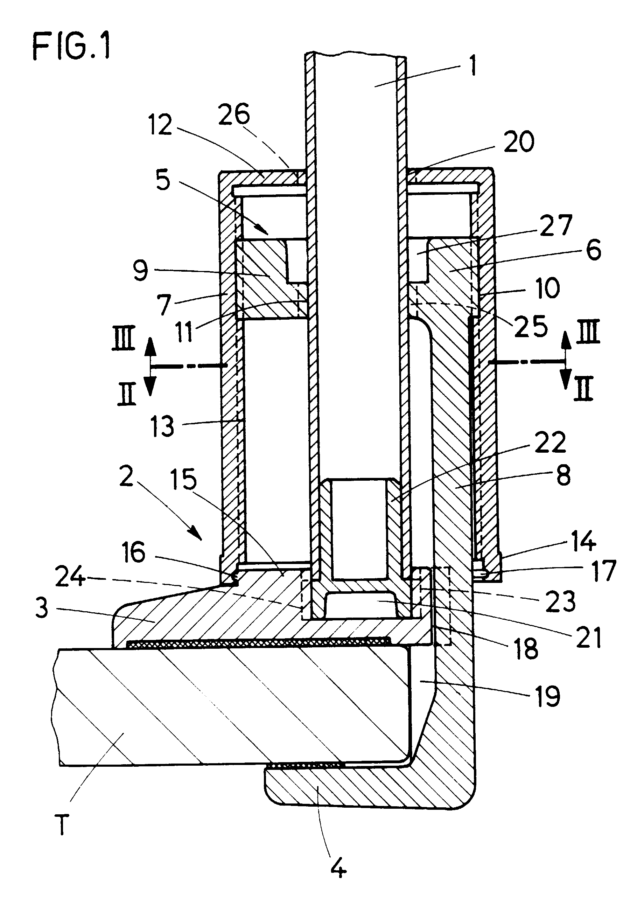

In der Zeichnung ist der Erfindungsgegenstand an Hand eines Ausführungsbeispieles näher veranschaulicht, und zwar zeigen
- Fig. 1: eine erfinungsgemäße Schraubzwinge im Axialschnitt und die

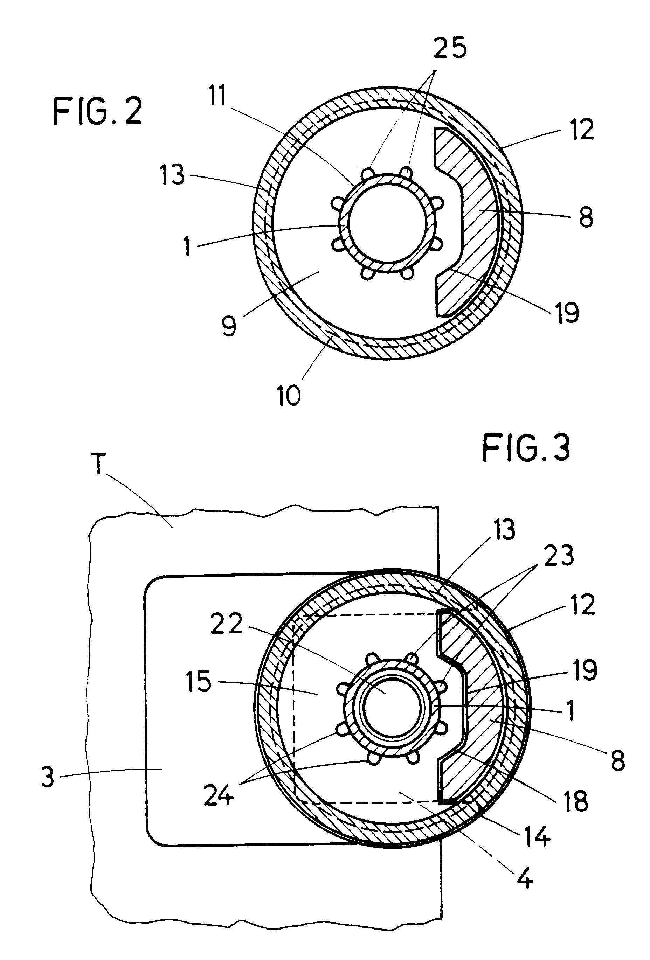

- Fig. 2 und 3: Querschnitte nach den Linien II-II bzw. III-III der Fig. 1.

Zur Befestigung eines nur mit seinem rohrförmigen Fußteil 1 angedeuteten Ständers an einer Tischplatte T ist eine Schraubzwinge 2 vorgesehen, die zwei Klemmbacken, eine obere KLemmbacke 3 und eine untere Klemmbacke 4, und ein Schraubengetriebe 5 zur Betätigung der Klemmbacken 3, 4 umfaßt. Das Schraubengetriebe 5 setzt sich dabei aus einem die Außengewindespindel 6 bildenden drehfesten Getriebeteil und einem die Mutter 7 bildenden drehbaren Getriebeteil zusammen, wobei die Spindel 6 aus einem über einen Steg 8 mit der unteren Klemmbacke 4 einstückigen Zylinderstück 9 besteht, das ein Außengewinde 10 und eine Innenbohrung 11 aufweist. Die Mutter 7 ist ihrerseits gleichzeitig als Drehgriff 12 ausgebildet, die mit ihrem Innengewinde 13 auf dem Außengewinde 10 des Zylinderstückes 9 aufschraubbar ist und mit ihrem unteren Rand 14 am oberen Klemmbacken 3 angreift. Dazu bildet die obere Klemmbacke 3 einen Halteansatz 15 mit einem Raststeg 16, auf dem der untere Rand 14 des Drehgriffs 12 mit einer Ringnut 17 einrastet, was eine verdrehbare, aber schiebefeste Verbindung ergibt.

Die obere Klemmbacke 3 ist mit Führungsansätzen 18 an ihrer Rückseite entlang einer Führungsbahn 19 des Steges 8 und damit gegenüber der Spindel 6 drehfest, aber verschiebbar geführt, so daß eine Verdrehung des Drehgriffes 12 über das Zusammenwirken des Muttergewindes 13 mit dem Spindelgewinde 10 eine axiale Schiebeverstellung der mit der Mutter 13 drehbar, aber verschiebefest verbundenen oberen Klemmbacke 3 gegenüber der mit der Spindel 6 drehfest und verschiebefest verbundenen unteren Klemmbacke 4 ergibt und eine einfache Betätigung der Klemmbacken 3, 4 mit sich bringt.

Der Fußteil 1 ist durch eine Axialbohrung 20 des Drehgriffes 12 relativverdrehbar durch den Drehgriff 12 hindurchgesteckt und ragt durch die Innenbohrung 11 des Zylinderstückes 9 bis in eine Aufnahme 21 der oberen Klemmbacke 3, in der der Fußteil 1 drehfest abgestützt wird. Dazu ist in das untere Ende des Fußteiles 1 eine Stellbuchse 22 mit radial vorstehenden Haltestegen 23 eingesetzt, die in entsprechende Ausnehmungen 24 der Aufnahme 21 eingreifen. Um ein nachträgliches Ein- und Ausbauen des Fußteiles 1 zu ermöglichen, sind die Innenbohrung 11 des Zylinderstückes 9 und auch die Axialbohrung 20 des Drehgriffes 12 mit ähnlichen Ausnehmungen 25, 26 versehen, wobei aber im Zylinderstück 9 eine Freistellung 27 vorhanden ist, um nicht durch eine ungünstige Drehstellung des Zylinderstückes 9 relativ zum Drehgriff 12 eine Ständermontage bei einer engen Klemmstellung der Klemmbacken 3, 4 zu verhindern.

Die erfindungsgemäße Schraubzwinge 2 zeichnet sich bei einfacher Bauweise durch ihre Stabilität und Festigkeit und ihre hervorragende Klemmwirkung aus.

## Patentansprüche

1. Schraubzwinge (2) zur Befestigung eines Ständers, insbesondere eines Schwenkarmes, an einer Tischplatte (T) od. dgl., mit zwei über ein Schraubengetriebe (5) aus Außengewindespindel (6) und Innengewindemutter (7) betätigbaren Klemmbacken (3, 4), wobei der drehbare, einen Drehgriff (12) aufweisende Getriebeteil relativverdrehbar, aber verschiebefest an der einen Klemmbacke (3) und der drehfeste Getriebeteil dreh- und verschiebefest an der anderen Klemmbacke (4) angreifen und beide Klemmbacken (3, 4) relativ zueinander drehfest, aber schiebeverstellbar geführt sind, dadurch gekennzeichnet, daß der drehbare Getriebeteil die Mutter (7) bildet und den Drehgriff (12) trägt und der Ständer (1) relativverdrehbar durch eine Axialbohrung (20) des Drehgriffes (12) hindurchsteckbar und drehfest an der der Mutter (7) zugeordneten Klemmbacke (3) oder dem drehfesten Getriebeteil abstützbar ist.

2. Schraubzwinge nach Anspruch 1, dadurch gekennzeichnet, daß der hülsenförmige Drehgriff (12) selbst als Mutter (7) vorgesehen und mit seinem klemmbackenseitigen Rand (14) verdrehbar an einem Halteansatz (15) der zugehörigen Klemmbacke (3) ansetzbar ist.

3. Schraubzwinge nach Anspruch 1, dadurch gekennzeichnet, daß die Spindel (6) aus einem über einen Steg (8) mit der zugehörigen Klemmbacke (4) einstückigen Zylinderstück (9) besteht, das ein Außengewinde (10) und eine Innenbohrung (11) aufweist.
